**Europäisches Patentamt**

**European Patent Office**

**Office européen des brevets**

(11) Veröffentlichungsnummer: **0 092 727**

**B1**

(12) # EUROPÄISCHE PATENTSCHRIFT

(45) Veröffentlichungstag der Patentschrift:
16.03.88

(51) Int. Cl.⁴: **C 08 G 81/02**

(21) Anmeldenummer: 83103489.7

(22) Anmeldetag: 11.04.83

(54) Verfahren zur Herstellung von Blockcopolymeren auf der Basis von Ethylenpolymerisaten und anderen Polymeren.

(30) Priorität: 22.04.82 DE 3214981

(43) Veröffentlichungstag der Anmeldung:
02.11.83 Patentblatt 83/44

(45) Bekanntmachung des Hinweises auf die Patenterteilung:
16.03.88 Patentblatt 88/11

(84) Benannte Vertragsstaaten:
AT BE DE FR GB NL

(56) Entgegenhaltungen:
US-A-4 350 794

Patent Abstracts of Japan Band 5, Nr. 195, 11.
Dezember 1981 & JP-A-56-118422
Patent Abstracts of Japan Band 2, Nr. 117, 29.
September 1978 Seite 2238C78 & JP-A-53-79986

Die Akte enthält technische Angaben, die nach
dem Eingang der Anmeldung eingereicht wurden
und die nicht in dieser Patentschrift enthalten sind.

(73) Patentinhaber: BASF Aktiengesellschaft, Carl-
Bosch- Strasse 38, D-6700 Ludwigshafen (DE)

(72) Erfinder: Brandstetter, Franz, Dr., Ritterbueschel
45, D-6730 Neustadt (DE)
Erfinder: Ball, Wolfgang, Dr., 0 6,9, D-6800
Mannheim 1 (DE)
Erfinder: Blinne, Gerd, Dr., Im Woggtal 7, D-6719
Bobenheim (DE)
Erfinder: Bott, Kaspar, Dr., Rieslingweg 4, D-6706
Wachenheim (DE)
Erfinder: Theysohn, Rainer, Dr., Am Bruch 38,
D-6710 Frankenthal (DE)
Erfinder: Werner, Michael, Dr., Harzburger Weg
21, D-6800 Mannheim 33 (DE)
Erfinder: Ziegler, Walter, Dr., Starenweg 15,
D-6803 Edingen- Neckarhausen (DE)

**Beschreibung**

Die Erfindung betrifft ein Verfahren zur Herstellung von Blockcopolymeren auf der Basis von Ethylencopolymerisaten, die mindestens eine funktionelle Gruppe aus der Reihe der Halogene einpolymerisiert enthalten und anderen Polymeren.

Bei derartigen Blockcopolymeren handelt es sich um Polymere, in denen neben normalen Copolymeren, die aus Ethylen und einem mit Ethylen copolymerisierbaren Monomer aufgebaut sind, homo- oder copolymere Kettenabschnitte oder Blöcke anderer Monomerer enthalten sind.

Blockcopolymerisate auf der Basis von Ethylen sind aus der Literatur bekannt. Sie werden u.a. durch die radikalische Polymerisation verschiedener Monomerer in Gegenwart von Polyethylen hergestellt, wie es beispielsweise von Renfrew und Morgan in "Polythene" (1960), Seiten 373 bis 376, Verlag Iliffe & Sons Ltd., London, beschrieben ist.

Des weiteren kennt man Blockcopolymere auf der Basis von Ethylen mit Polyamiden, die durch die Umsetzung von nitrosierten Carbonamidgruppen enthaltenden Polyamiden erhalten werden (vgl. DE-PS 11 22 696).

Im Falle der Polyamide ist ein zusätzlicher Reaktionsschritt nötig. Bei der Herstellung der mit radikalisch polymerisierbaren Monomeren produzierbaren Blockpfropfcopolymeren werden recht heterogene Produkte erhalten. Des weiteren ist dieses Verfahren nur bei radikalisch polymerisierbaren Monomeren möglich.

Es ist ferner bekannt, chlorsulfoniertes Polyäthylen mit Polyalkylenglykol, das mindestens eine OH-Endgruppe aufweist, umzusetzen (Patent Abstracts of Japan, Band 5, Nr. 195, 11.12.81 & JP-A-56-118422).

Es ist auch schon vorgeschlagen worden, zur Herstellung von Blockcopolymeren auf der Basis von Ethylencopolymerisaten die Ethylencopolymerisate mit lebenden polymeren Anionen, erhalten aus ethylenisch ungesättigten, anionisch polymerisierbaren Monomeren umzusetzen (vgl. DE-Patentanm. P 31 50 171). Bei diesem Verfahren muß stets unter Ausschluß von Luft und Feuchtigkeit in einem organischen Lösungsmittel gearbeitet werden.

Der Erfindung lag die Aufgabe zugrunde, ein einfaches Verfahren zur Herstellung von Blockcopolymeren auf der Basis von Ethylencopolymerisaten aufzufinden.

Diese Aufgabe wurde durch ein Verfahren gelöst, bei dem die eingangs definierten Ethylencopolymerisate mit Polymeren umgesetzt werden, die mindestens eine funktionelle Gruppe aus der Reihe der Alkohole, Phenole und/oder Thiole aufweisen.

Nach bevorzugter Verfahrensweise ist das Ethylencopolymerisat ein Halogenalkyl-(meth)acrylat, insbesondere ein 2-Chlorethylacrylat enthaltendes Copolymerisat des Ethylens.

Bevorzugt ist auch ein Verfahren, bei dem die Polymeren nur eine funktionelle Gruppe aus der Reihe der Alkohole, Phenole und/oder Thiole aufweisen.

Besonders bevorzugt ist ein Verfahren, bei dem die Polymeren je eine funktionelle Endgruppe aufweisen und ein Poly(ethersulfon), Poly(phenylenoxid), Poly(ethylenglykolmonoether), Poly(ethylenglykolmonoester), Poly(propylenglykolmonoether) oder ein Poly(propylenglykolmonoester) sind.

Durch das Verfahren werden Blockcopolymere der allgemeinen Formel erhalten:

$[(A_n)_i (B_l)_k (C_m)_j]$, wobei A gleich Ethylen und ein mit Ethylen copolymerisierbares Monomeres aus der Reihe der (Meth)-Acrylate, der Vinylester, Vinylether, der ungesättigten Säuren, Nitrile, Amide, Halogene, Vinylsilane und Kohlenmonoxid, B ein mit Ethylen copolymerisierbares, eine Gruppe aus der Reihe der Halogene tragendes Monomer, $C_m$ ein Polymerrest eines Stammpolymeren, das mindestens eine funktionelle Gruppe aus der Reihe der Alkohole, Phenole und/oder Thiole trug, n und m eine ganze Zahl größer als 30, l, i, k und j eine ganze Zahl gleich oder größer als eins und k mal l gleich oder größer j ist. Bei A sind mindestens 30 Gew.-%, vorzugsweise 50 Gew.-% Ethylen. Ganz besonders ist Ethylen alleine bevorzugt. Bei den unter A verwendeten Comonomeren handelt es sich beispielsweise um Methylacrylat, Ethylacrylat, n-Butylacrylat, t-Butylacrylat, Ethylhexylacrylat, Laurylacrylat, Methylmethacrylat, Vinylacetat, Vinylpropionat, Vinylbutyrat, Methylvinylether, Acrylsäure, Acrylnitril, Acrylsäuredimethylamid oder Kohlenmonoxid.

Bei B wird bevorzugterweise ein Halogenalkyl-(meth)acrylat, insbesondere 2-Chlorethylacrylat verwendet. Bei $C_m$ handelt es sich um Polymerreste, die beispielsweise aus folgenden Stammpolymeren herrühren können: Polycarbonate, Polysulfone, Polyethersulfone, Polyether, Polyoximethylene, voll oder partiell verseifte Polyvinylacetate, um partiell oder nicht veretherte und/oder veresterte Cellulose, um Polymere mit Hydroxylgruppen aus der Reihe der Polybutadiene, Polyisoprene, Polystyrole, Polystyrolacrylnitrile, Poly(meth)acrylate, um Polyester, Polyurethane, Phenoplaste, Poly(tetrahydrofuran). Als besonders geeignet werden Poly(ethersulfone), Poly(phenylenoxide), Monoether bzw. Monoester von Poly(ethylenglykol) und Poly(propylenglykol) bzw. Monoester von Poly(ethylenglykol) und Poly(propylenglykol) und Silicone angesehen.

Derartige Polymere sind beispielsweise beschrieben in dem Handbuch "Ullmanns Encyclopädie der technischen Chemie", Band 19 (1980), Seiten 31 bis 38, 227 bis 264 und 297 bis 342 oder in "Journal Polymer Science" 40 (1959), Seite 399, in "Industrial Engineering Chemistry" 51 (1959), Seite 147, in den US-Patentschriften 3 306 879, 3 914 266, 3 946 091, 4 028 341, 3 956 442 und 3 965 069; in den Deutschen Offenlegungsschriften 29 40 190, 29 36 977 und 30 16 386; in "Polymer Bulletin" 4 (1981), Seiten 343 bis 350, in der Broschüre "Neue polymere Werkstoffe", von H.G. Elias, Carl Hanser Verlag, München-Wien, (1975), Seiten 1969 bis 1974; im Lehrbuch "Polymer Chemistry" von B. Vollmert, Springer Verlag, Berlin-Heidelberg - New York (1973); im "Polymer Handbook", von I. Brandrup und E.H. Immergut (1975), Verlag John Wiley a. Sons, New York; und in Houben-Weyl, "Methoden der organischen Chemie", Band 14/2 (1963), Seiten 1 bis 636, Verlag Georg Thieme, Stuttgart.

Die erfindungsgemäß zu verwendenden Ethylencopolymerisate, die mindestens eine funktionelle Gruppe aus der Reihe der Halogene enthalten, sind an sich bekannt (vgl. Renfrew u. Morgan, "Polythene", [1960], Seiten 345 bis 369, Verlag Iliffe & Sons Ltd., London oder US-PS 3 418 301). Die Herstellung der Ethylenpolymerisate kann nach herkömmlichen Verfahren im Autoklaven und/oder rohrförmigen Polymerisationssystem bei Drücken von 150 bis 5000 bar und Temperaturen von 40 bis 450°C in Gegenwart radikalisch zerfallender Polymerisationsinitiatoren erfolgen (vgl. Ullmanns Encyclopädie der technischen Chemie, Band 19 (1980), Seiten 167 bis 226).

Die Ethylencopolymerisate haben eine Dichte im Bereich von 0,910 bis 0,965, insbesondere 0,915 bis 0,960 g/cm$^3$. Die Schmelzindices der Ethylencopolymerisate, gemessen bei 190°C und einem Auflagegewicht von 2,16 kp, liegen oberhalb von 0,01 g/10 min. Die Ethylencopolymerisate weisen die allgemeine Formel: $[(A_n)_i (B_l)_k]$ auf, wobei A gleich Ethylen und gegebenenfalls ein mit Ethylen copolymerisierbares Monomeres aus der Reihe der (Meth)-Acrylate, der Vinylester, Vinylether, der ungesättigten Säuren, Nitrile, Amide, Vinylsilane und Kohlenmonoxid, B ein mit Ethylen copolymerisierbares, eine Gruppe aus der Reihe der Carbonsäureanhydride tragendes Monomer, n eine ganze Zahl größer als 30, l, i und k eine ganze Zahl gleich oder größer als eins ist. Die Zahlen für n und l entsprechen dem Polymerisationsgrad, die Zahlen für i und k der Blockanzahl im Copolymerisat.

Für das erfindungsgemäße Verfahren besonders geeignet sind Copolymerisate des Ethylens mit Halogenalkyl-(meth)-acrylat. Ganz besonders bevorzugt sind Copolymerisate des Ethylens mit 2-Chlorethylacrylat.

Nach dem erfindungsgemäßen Verfahren werden die oben beschriebenen Ethylencopolymerisate in Lösung oder in Schmelze, bevorzugt unter Sauerstoffausschluß, mit den Polymeren, die eine funktionelle Gruppe aus der Reihe der Alkohole, Phenole und/oder Thiole enthalten, umgesetzt. Die Umsetzung erfolgt dabei unter den üblichen Bedingungen, wie sie beispielsweise für die Herstellung von Ethern und Thioethern in dem Lehrbuch "Organikum", VEB Deutscher Verlag der Wissenschaften, 1968, zitiert sind. Man kann aber auch in einem Zweiphasensystem in Gegenwart von Phasentransferkatalysatoren, wie quartären Ammonium-, Phosphonium und tertiären Sulfonium-Verbindungen arbeiten (vgl. E.V. Dehmlow, New Synthetic Methods, Vol. 1, (1975) Seite 1 und Vol. 6 (1979), Seite 205, Verlag Chemie Weinheim). Die Umsetzung der Ethylencopolymerisate mit den funktionellen Gruppen enthaltenden Polymeren kann aber auch in der Schmelze erfolgen; Die Mischung der Schmelzen wird dabei bevorzugt auf stark homogenisierenden Mischaggregaten, wie Extrudern oder Walzen vorgenommen.

Die auf diesem Weg erhaltenen Blockcopolymerisate sind von allgemeinen Typ $[(A_n)_i (B_l)_k (C_m)_j]$.

Die erfindungsgemäß erhaltenen Blockcopolymerisate sind Polymerisate mit einer Vielfalt von Eigenschaften und zeigen eine Reihe von Vorteilen gegenüber bisher bekannten Blockcopolymerisaten. Sie können auf herkömmlichen Maschinen durch Formblasen, Extrusion oder Spritzguß verarbeitet werden. Sie können alleine, insbesondere als Schmelzhaftkleber, als Mineralöladditive oder in Kombination mit anderen Thermoplasten zur Verbesserung der Zähigkeit, Fließeigenschaften und des Oberflächenbildes verwendet werden.

Die Erfindung wird anhand von Beispielen erläutert:

**Beispiele**

Als Ethylencopolymere fanden Produkte Verwendung, die nach dem Hochdruckprozeß in Autoklaven oder rohrförmigen Polymerisationssystemen erhalten wurden. Der Comonomeranteil, Dichte und Schmelzindex sind in der Tabelle aufgeführt.

Als Polymere, die mindestens eine funktionelle Gruppe aus der Reihe der Alkohole, Phenole, Thiole enthalten, wurden verwendet:
1. Polyethersulfon mit einem mittleren Molekulargewicht von 25.000 (gemessen in der Ultrazentrifuge).
2. Monooctylphenylether von Dihydroxipolyethylenglykol mit ca. 40 Ethylenoxideinheiten.
3. Mononionylphenylether eines Copolymerisates aus Propylen- und Ethylenoxid mit ca. 50 Propylenoxid- und ca. 50 Ethylenoxideinheiten.
4. Polycarbonat auf der Basis von 2,2-Bis-(4-hydroxiphenyl)propan mit einer relativen Viskosität von 1,32 (gemessen an einer 0,5 %-igen Lösung in Methylenchlorid.
5. Polystyrol mit einer Hydroxylendgruppe mit einem mittleren Molekulargewicht von 16.000.
Herstellung der Blockcopolymerisate

Das Ethylencopolymerisat, das 8 Stunden bei 90°C im Vakuum bei 1 Torr (133Pa) getrocknet wurde, wurde in trockenem Ethylbenzol bei 80 bis 110°C unter Stickstoff gelöst.

**Beispiel 1**

Zu der in der Tabelle angegebenen Menge an Ethylencopolymerisat (ca. 10 %-ig in Ethylbenzol), wurden die in der Tabelle angegebene Menge an Polyethersulfon (ca. 5 %-ig) in Chlorbenzol), 9 Gew.-Teile 10 %-ige toluolische Lösung von Tricaprylmonoethylammoniumchlorid und 5,6 Gew.-Teile einer 50 %-igen Natronlauge in Wasser unter Stickstoff zugegeben. Die Lösung wurde mit einem Ultraturax bei 50 bis 60°C homogenisiert (ca. 2 Minuten). Man rührte dann 1 Stunde bei dieser Temperatur und erhöhte dann die Temperatur auf ca 100°C. Nach dem Abkühlen wurde das Polymerisat in Methanol ausgefällt, mit Methanol gewaschen, abfiltriert und im Vakuum bei 60°C und 1 Torr (133Pa) getrocknet.

Zur Bestimmung des Umsatzes wurden 5 g des Blockcopolymerisats 5 Stunden bei 23°C in 100 ml Methylenchlorid gerührt. Man dekantierte und wiederholte den Vorgang noch zweimal. Dann wurde nach dem Abdampfen des Lösungsmittel der unlösliche Anteil bestimmt. Hieraus wurde der Umsatz folgendermaßen ermittelt:

$$\text{Umsatz} = \frac{100 - A}{5}$$

A: unlöslicher Anteil.

**Beispiel 2 und 3**

Zu der in der Tabelle angegebenen Menge an Ethylencopolymerisat (ca. 10 %-ig in Ethylbenzol) wurden unter Luftausschluß die in der Tabelle angegebene Menge an Monooctylphenylether eines Copolymerisates aus Propylen- und Ethylenoxid (ca. 20 %-ig in Ethylbenzol) 9 Gew.-Teile 10 %-ige toluolische Lösung von Tricaprylmonoethylammoniumchlorid und 5,6 Gew.-Teile einer 50 %-igen Natronlauge in Wasser gegeben. Die Lösung wurde mit einem Ultraturax bei 50 bis 60°C ca. 2 Minuten homogenisiert. Man ließ 1 Stunde bei dieser Temperatur stehen und erhöhte die Temperatur dann auf ca. 100°C. Nach dem Abkühlen wurde das Reaktionsprodukt in Ethanol ausgefällt, zweimal mit Ethanol und einmal mit Methanol gewaschen und bei 60°C im Vakuum bei 1 Torr (133Pa) getrocknet. Der Umsatz wurde folgendermaßen bestimmt:

$$\text{Umsatz} = \frac{A \cdot 100}{B}$$

B: Menge an Ethylencopolymerisat und an Ether von Dihydroxipolyethylenglycol bzw. von dem Copolymerisat des Propylen- und Ethylenoxid, die zur Reaktion gebracht werden [in g]

A: Menge an gefälltem Produkt [in g]

**Beispiel 4**

Zu der in der Tabelle angegebenen Menge an Ethylencopolymerisat (ca. 10 %-ig in Ethylbenzol) wurden unter Stickstoff die in der Tabelle angegebene Menge an Polycarbonat (ca. 10 %-ig in Chloroform), 9 Gew.-Teile 10 %-ige toluolische Lösung von Tricaprylmonoethylammoniumchlorid und 5,6 Teile einer 50 %-igen Natronlauge in Wasser gegeben. Die Lösung wurde mit einem Ultraturax bei 40°C ca. 2 Stunden homogenisiert. Man ließ 1 Stunde bei dieser Temperatur stehen. Nach dem Abkühlen wurde das Reaktionsprodukt mit Methanol ausgefällt, abgesaugt und im Vakuum bei 60°C und 1 Torr (133Pa) getrocknet. Die Bestimmung des Umsatzes erfolgte wie in Beispiel 1 beschrieben mit der Änderung, daß als Extraktionsmittel Chloroform verwendet wurde.

**Beispiel 5**

Zu der in der Tabelle angegebenen Menge an Ethylencopolymerisat (ca. 10 %-ig in Ethylbenzol) wurden unter Stickstoff die in der Tabelle angegebene Menge an OH-Endgruppen enthaltenden Polymeren (ca. 15 %-ig in Ethylbenzol), 9 Gew.-Teile 10 %-ige toluolische Lösung von Tricaprylmonoethylammoniumchlorid und 5,6 Gew.-Teile einer 50 %-igen Natronlauge in Wasser gegeben. Die Lösung wurde mit einem Ultraturax bei 50 bis 60°C ca. 2 Minuten homogenisiert. Man ließ 1 Stunde bei dieser Temperatur unter Stickstoff und Rühren stehen und erhöhte im Verlauf von 0,5 Stunden auf ca. 100°C. Nach dem Abkühlen wurde das Reaktionsprodukt in Methanol ausgefällt, abgesaugt und bei 60°C im Vakuum bei 1 Torr (133Pa) getrocknet.

Die Bestimmung des Umsatzes erfolgte wie in dem Beispiel 1 beschrieben mit der Abänderung, daß als Extraktionsmittel Tetrahydrofuran verwendet wurde.

**Tabelle**

| Beispiele (erfin- dungsge- mäß) | Ethylencopolymerisat Comonomeres [Gew.-%] | | Dichte [g/cm³] | Schmelzindex 190°C/21,18N [g/10 min] | Gew.Tle. | Polymer mit funk- tioneller Gruppe Art Gew.Tle. | | Blockcopolymerisat Umsatz [%] |
|---|---|---|---|---|---|---|---|---|
| 1 | 2-Chlorethyl- acrylat | 2 | 0,919 | 0,7 | 100 | 1 | 40 | 84 |
| 2 | " | 2 | 0,919 | 0,7 | 100 | 2 | 100 | 62 |
| 3 | " | 2 | 0,919 | 0,7 | 100 | 3 | 100 | 67 |
| 4 | " | 2 | 0,919 | 0,7 | 100 | 4 | 120 | 69 |
| 5 | " | 2 | 0,919 | 0,7 | 100 | 5 | 100 | 74 |

**Patentansprüche**

1. Verfahren zur Herstellung von Blockcopolymeren auf der Basis von Ethylencopolymerisaten, die mindestens eine funktionelle Gruppe aus der Reihe der Halogene einpolymerisiert enthalten und anderen Polymeren, dadurch gekennzeichnet, daß die Ethylencopolymerisate mit Polymeren umgesetzt werden, die mindestens eine funktionelle Gruppe aus der Reihe der Alkohole, Phenole und/oder Thiole aufweisen.

2. Verfahren nach Anspruch 1, dadurch gekennzeichnet, daß das Ethylencopolymerisat ein Halogenalkyl-(meth)acrylat enthaltendes Copolymerisat des Ethylens ist.

3. Verfahren nach Anspruch 1, dadurch gekennzeichnet, daß das Ethylencopolymerisat ein 2-Chlorethylacrylat enthaltendes Copolymerisat des Ethylens ist.

4. Verfahren nach Anspruch 1, dadurch gekennzeichnet, daß die Polymeren nur eine funktionelle Gruppe aus der Reihe der Alkohole, Phenole und/oder Thiole aufweisen.

5. Verfahren nach Anspruch 1 bis 3, dadurch gekennzeichnet, daß die Polymeren je eine funktionelle Endgruppe aus der Reihe der Alkohole und Phenole aufweisen und ein Poly(ethersulfon), Poly(phenylenoxid), Poly(ethylenglykolmonoether), Poly(ethylenglykolmonoester), Poly(propylenglykolmonoether) oder ein Poly(propylenglykolmonoester) sind.

**Claims**

1. A process for the preparation of block copolymers based on ethylene copolymers which contain, as copolymerized units, one or more functional groups from the series consisting of the halogens and on other polymers, wherein the ethylene copolymers are reacted with polymers which possess one or more functional groups from the series consisting of the alcohols, phenols and/or thiols.

2. A process as claimed in claim 1, wherein the ethylene copolymer is an ethylene copolymer which contains a haloalkyl (meth)acrylate.

3. A process as claimed in claim 1, wherein the ethylene copolymer is an ethylene copolymer which contains 2-chloroethyl acrylate.

4. A process as claimed in claim 1, wherein the polymers possess only one functional group from the series consisting of the alcohols, phenols and/or thiols.

5. A process as claimed in claim 1 or 2 or 3, wherein the polymers each possess a terminal functional group from the series consisting of the alcohols and phenols, and are a poly(ether sulfone), poly(phenylene oxide) poly(ethylene glycol monoether), poly(ethylene glycol monoester), poly(propylene glycol monoether) or poly(propylene glycol monoester).

**Revendications**

1. Procédé de préparation de copolymères à blocs à base de copolymères éthyléniques, dans lesquels est copolymérisé au moins un groupe fonctionnel de la série des halogènes, et d'autres polymères, caractérisé en ce que l'on fait réagir les copolymères éthyléniques avec des polymères, qui comprennent au moins un groupe fonctionnel choisi dans la série des alcools, des phénols et(ou) des thiols.

2. Procédé suivant la revendication 1, caractérisé en ce que le copolymère éthylénique est un copolymère de l'éthylène contenant un (méth)acrylate d'halo-alkyle,

3. Procédé suivant la revendication 1, caractérisé en ce que le copolymère éthylénique est un copolymère de l'éthylène contenant un acrylate de chloro-2 éthyle.

4. Procédé suivant la revendication 1, caractérisé en ce que les polymères contiennent un seul groupe fonctionnel de la série des alcools, des phénols et(ou) des thiols.

5. Procéde suivant les revendications 1 a 3, caractérisé en ce que l'on utilise un polymère avec un groupe fonctionnel terminal de la série des alcools et avec un groupe fonctionnel terminal de la série des phénols, qui est une poly (éther-sulfone), un poly(oxyde de phénylène), un poly(mono-éther d'éthylène-glycol), un poly (mono-ester d'éthylène-glycol), un poly(mono-éther de propylène-glycol) ou un poly(mono-ester de propylène-glycol).